# EUROPEAN PATENT APPLICATION

(11) **EP 4 835 947 A1**
(43) Date of publication of application: **04.11.2026**
(21) Application number: 25173050.3
(22) Date of filing: 28.04.2025
(51) Int. Cl.: H01H 85/44, H01T 1/14, H01H 85/30, H02H 9/04, H02H 9/06, H01C 7/12, H01H 39/00, H01H 85/10, H01H 85/18, H01H 85/38

(54) **SURGE PROTECTIVE DEVICE INCLUDING SHORT CIRCUIT DISCONNECTOR AND THERMAL DISCONNECTOR**

(71) Applicant: Voltgard Systems d.o.o., 1000 Ljubljana (SI)
(72) Inventor: Topcagic , Zumret, 1000 Ljubljana (SI)
(74) Representative: Zacco GmbH

(57) **Abstract**

A fused surge protective device 300 comprising a first electrical terminal 350, a second electrical terminal 360, a fuse device 310 comprising a fusible element 314, an overvoltage protection circuit 320, the fuse device and the overvoltage protection circuit interconnecting the first electrical terminal and the second electrical terminal, thereby providing a current path between the first and second electric terminal, the fusible element being part of the current path, the fuse device and the overvoltage protection circuit being thermally coupled to a thermal actuator 340, the thermal actuator being configured to activate a thermal disconnect mechanism 330 in response to a temperature increase of and/or a heat flow through the thermal actuator, in particular when the temperature and/or the heat flow exceeds a prescribed trigger level, the thermal disconnect mechanism disconnecting the fusible element after being actuated by the thermal actuator.

## Description

### Field of the Invention

The present invention relates to the field of electrical devices for the protection of electrical circuits, more particularly, to the field of low-voltage surge protective devices including a short circuit disconnector and a thermal disconnector.

### Background

The occurrence of surges in the power, telecommunications, and data systems is inevitable. A surge is a transient wave of current or voltage in an electric circuit, typically lasting from tens to hundreds of microseconds.

The principal sources of surges are atmospheric discharges and switching maneuvers on the power system circuit/grid. If not mitigated, such surge events can cause severe damage to electrical wiring, degrade insulation, and destroy electronic devices.

Surge protective devices (SPDs) protect the electrical equipment by limiting (clamping) surge-initiated overvoltages to a certain equipment-withstand level, discharging the surge current into the earthing system, and partially absorbing the surge energy. They are typically connected directly across the AC or DC power input lines parallel to the protected circuit.

The basic (active) components of the surge protective devices are metal oxide varistors (MOVs), diodes, gas discharge tubes (GDTs), and spark gaps (SGs), which express a distinctly nonlinear VI (voltage-current) characteristic and are also called voltage-limiting (namely MOVs and diodes) and voltage-switching (namely GDTs and SGs) components. These components change their conductive properties when the applied voltage exceeds their characteristic (knee or switching) voltage level. Over time - either due to overload conditions, pollution, or aging - these components may degrade, subsequently changing their rated (nominal) electrical properties. Change in the electrical properties typically results in a short circuit failure mode of an SPD. This can lead to dangerous and uncontrolled destruction (explosion, fire) of the SPD itself. Therefore, in addition to voltage-dependent, additional safety components for thermal runaway and fault current protection are installed into or in line with the surge protective devices.

The thermal runaway protection component, often referred to as the thermal disconnector (TD), prevents the thermal runaway and destruction of the voltage-dependent component by directly disconnecting it or initiating its disconnection from the power source when it exceeds a specified (safe) temperature limit, and before the short circuit of the component.

The inline overcurrent disconnector, often a fuse or a circuit breaker, disconnects an SPD from the power source in case of a short circuit (fault) currents. The fault currents may occur: a) when the voltage-dependent component, e.g. varistor, experiences a sudden short circuit with complete degradation of insulation and current-limitation capabilities, and b) when the thermal disconnector operation initiates safe short circuit conditions.

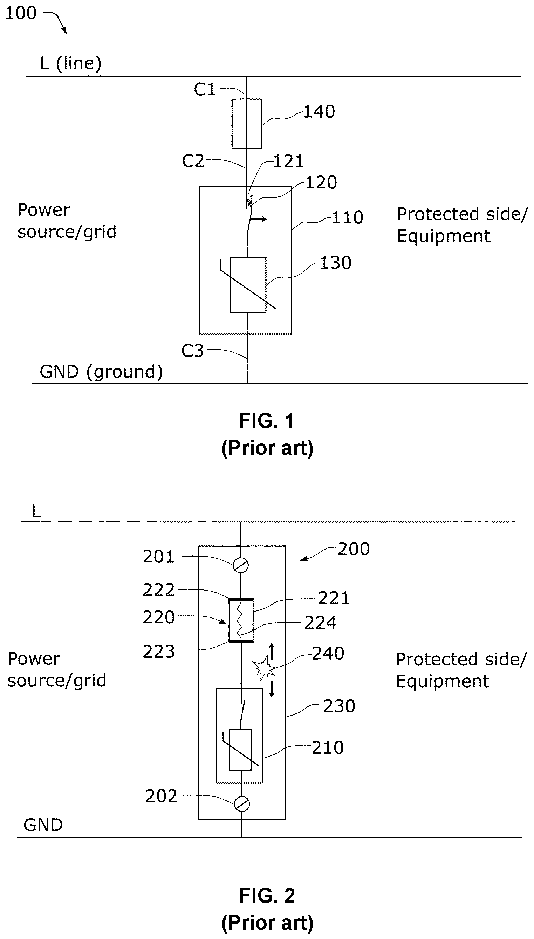

As shown in FIG. 1, typically for the SPD 110 with integrated thermal disconnector 120 and at least one voltage-dependent component 130, the overcurrent protection is implemented by a series connection of the external (standardized) fuses 140, configuring an externally-fused SPD circuit 100.

Conventional (standardized) fuses are not primarily designed for the surge current requirements thus, may not be able to withstand large surge currents, which may occur in the installation. As a result, they might blow or trip in response to such events. To achieve the desired high surge current rating, the fuse size typically has to be relatively large, leading to over-dimensioning of the overcurrent protection with increased size, cost, and complexity.

The external fuse over-dimensioning has a negative effect on the safe disconnection of the externally-fused SPD circuit 100. At limited short-circuit currents (available prospective current of the power source to which SPD 110 is connected), the fuse may only trip and disconnect in tens of seconds or more, which causes hazardous damage to the SPD 110. In addition, the protection level (a voltage applied to the equipment during a surge event) is increased as it is the sum of the voltage across the SPD 110 and the voltages developed across the connecting cables C1 - C3.

A fused surge protective devices with integrated fuse, i.e., overcurrent protection, are known by the prior art (EP4208885A1, ATA206996A, EP3963685A1, US2022209530A1, US2013106567A1, and EP3188197A1).

With reference to FIG. 2, a fused surge protective devices 200, currently available in the market, and in accordance with the prior art, comprise a first electrical terminal 201, a second electrical terminal 202, an overvoltage protection unit (OPU) 210, a housing 230, and an integrated fuse (IF) 220. The overvoltage protection unit OPU 210, and the integrated fuse IF 220 are disposed in the housing 230, and are electrically interconnected between the terminals 201 and 202 to form a fused surge protective device (FSPD) 200. Typically, the OPU 210 includes a varistor with the thermal disconnector (TD), alternatively, a gas discharge tube, or a spark gap. The IF comprises a ceramic housing 221, a first electrical terminal 222, a second electrical terminal 223, and a fusible element 224 intended to melt and disintegrate during fault current disconnection. The housing 230 is formed of electrically insulating polymer material (plastic). As the OPU 210 and IF 220 are designed as electrically and mechanically independent units and disposed inside the single housing 230, in close vicinity to each other, the degradation or damage 240 of one unit may cause damage to the second one, therefore posing a hazardous risk for the safe operation of the FSPD 200. For example, the FSPD 200 may be exposed to surge currents or electrical conditions, causing the explosion of the OPU 210. The explosion 240 of the OPU 210 will produce mechanical and thermal stresses on the IF 220, damaging it (e.g., cracking of the ceramic housing 221) to the extent of not being capable of safely extinguishing fault currents, thereby creating a hazardous situation.

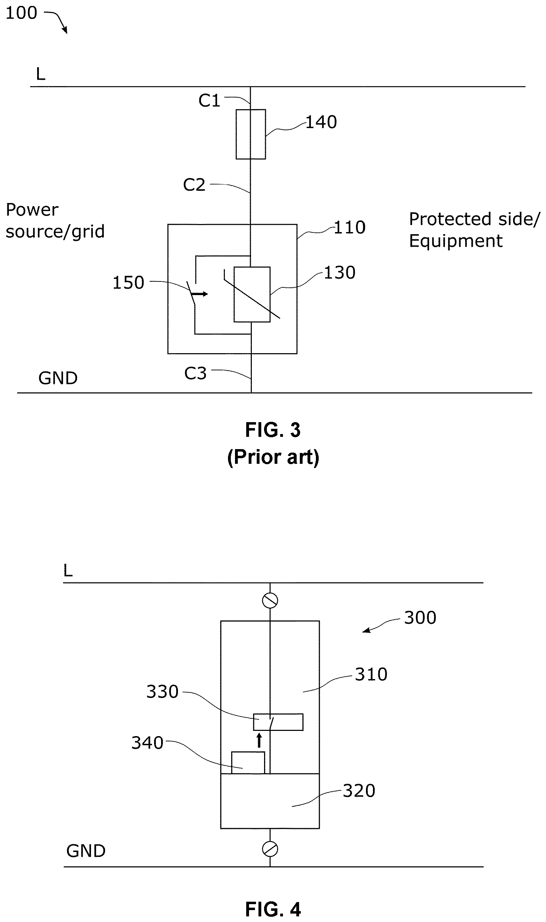

According to the prior art, and referring to FIGS. 1 and 3, the two approaches in the implementation of the thermal disconnection are common. The first approach embodies the thermal disconnector as an electrical contact 120 between the voltage-dependent component 130 and the input terminal of the SPD 110, usually made utilizing a mechanically prestressed flexible/movable conductor attached to one of the two electrodes of the voltage-dependent component employing a fusible alloy (solder) joint 121 with a melting temperature between 130-200 °C. Once the voltage-dependent component exceeds the safe temperature limit, which is between 150-200 °C, the solder joint will loosen and allow the separation and increase in the gap between the mechanically prestressed flexible/movable conductor and the electrode of the voltage-dependent component. Such an operation of the thermal disconnector causes an interruption of the electrical circuit and disconnection of the voltage-dependent component from the power source. The surge protective devices employing the above-described thermal disconnection approach are, according to the international standards for low-voltage surge protective devices (IEC 61643-12 and 61643-11), referred to as the "Open type surge protective device." Such known solutions are described in detail in EP1880453A1, US2011205011A1, EP2319143A1, EP2537164B1, EP3330996A1, and EP2284857B1, among others. The implementation of the thermal disconnector 120, as described above, can experience malfunctions, increasing the possibility of hazardous disconnection. Sporadically, the voltage-dependent component can experience an overload state conducting the current with an amplitude below the cut-off level of the inline overcurrent disconnector (i.e., external fuse) and above the level at which the thermal disconnector operates promptly, leading to the failure of the voltage-dependent. Additionally, the disadvantage of such a solution is the occurrence of thermal disconnection during a surge event. In this scenario, the overvoltage component, e.g., the varistor, is overheated by excessive surge current, leading to the thermal disconnect. However, thermal disconnection under surge current typically leads to the explosion of the SPD.

Referring to FIG.3, the second approach utilizes the creation of a, to the voltage-dependent component parallel, low-ohmic path/connection 150 when the temperature of the voltage-dependent component 130 exceeds the safe limit. The formed parallel path 150 redirects the overload current with an immediate increase of the current amplitude (fault current), initiating the operation of the inline overcurrent disconnector (external fuse) 140. This ensures a safe-fail disconnection of the SPD from the power source. The surge protective devices employing the above-described thermal disconnection approach are referred to in the international standards for low-voltage surge protective devices (IEC 61643-12 and 61643-11) as the "Short-circuiting type SPDs." Such known solutions are described in detail in US6038119A, US2007139850A1, DE10313045A, US2015103462A1, DE102012004678A1, DE102017118181A1, EP3459090A1 and EP3198692A1, wherein, from the referenced prior art, the two methods of creation of the parallel short-circuiting path are distinguished. The first method utilizes the installation of a homogeneous body - usually shaped in a ring or ball form - composed of meltable alloy (solder) into an electrode electrically connected to the voltage-dependent component. During the thermal runaway and temperature increase of the voltage-dependent component above the permissible limits, the meltable alloy body will start melting and reshaping, producing electrical contact with the second electrode and electrically bridging the voltage-dependent component (see US2007139850A1). The second method relies on creating a short-circuit path by making electrical contact between the opposite electrodes of the voltage-dependent component, triggered by the temperature rise of the voltage-dependent component (DE10313045A, US2015103462A1, DE102012004678A1, DE102017118181A1, EP3459090A1, EP3198692A1) or its destruction (US6038119A).

The disadvantages of creating a short circuit path by melting the body composed of the solder alloy are the following: firstly, it is difficult to ensure uniform heating of the entire volume of the solder and thus create a smooth and repeatable creation of the short circuit, which can lead to malfunction and hazardous destruction of the SPD, and secondly, there may be a time lag between the temperature rise of the voltage-dependent component and the solder body, which can lead to hazardous destruction of the voltage-dependent component before the creation of the safe short circuit.

The disadvantage of creating a short circuit connection utilizing moving contacts is mechanical repulsions of the contacts during the switching maneuver and the consequent arcing. The arcing poses a significant risk to the safe operation and disconnection of the surge protection device.

### Summary

The objective of the present invention is to provide a surge protective device, and more particularly, a fused surge protective device (FSPD) with a mechanically unitary construction and an electro-thermo-mechanically coupled operation, wherein the surge protection, thermal disconnection, and short circuit disconnection, are performed in a hazard-free manner.

The object is satisfied by a fused surge protective device as defined in claim 1. Some preferred embodiments of the invention are mentioned in the dependent claims.

As used herein, "unitary FSDP" means an FSPD that is a single, unitary device composed of components, which may be secured together at joints or seams, wherein the device cannot be decomposed to form an overvoltage protection unit only or to form a fuse device only. A lack of one component of the FSPD, according to the present invention, may make the device inoperative.

The present invention successfully solves and eliminates the disadvantages of the solutions in accordance with the prior art by incorporating a unitary mechanical construction, which eliminates the negative mutual effects of an overvoltage protection circuit (OPC) and a fuse device (FD) comprising the FSPD.

Advantageously, the present innovation successfully solves and eliminates the disadvantages of the solutions in accordance with the prior art by incorporating a safe disconnection during surge overload of the SPD. This is achieved by including an electro-thermo-mechanically coupled construction of the OPC, FD, a thermal actuator (TA), and a thermal disconnect mechanism (TDM), which can trip the integrated fuse device in a hazard-free manner.

The overvoltage protection device may be configured to produce heat in response to overvoltage surges.

Thermal activation of the thermal disconnection element may facilitate a safe disconnection operation of the fused surge protective device, in that the presence of arcs outside the fuse device may be reduced. The presence of arcs outside the fuse device, such as arcs occurring after the overvoltage protection device trips, may be reduced as the thermal disconnection mechanism disconnects the current path by the fuse device, such as by disconnecting the fusible element of the fuse device. An arc may therefore occur within the fuse device, which is significantly safer than an arc occurring by the overvoltage protection device. By reducing the occurrence of arcs, EMC issues might be reduced. As sparks may generate EMC issues.

The prescribed trigger level may be defined by thermal parameters, such as a temperature above a certain limit, such as a temperature above a certain limit for longer than a specific duration. The prescribed trigger level may also be defined as a sum of thermal energy based on temperature and duration, the prescribed trigger level may therefore require a shorter duration for higher temperatures in order to activate the thermal actuator.

The electric arc extinguishing agent may be in the form of a vacuum.

The thermal disconnect mechanism may irreversibly disconnect the fusible element for disconnecting the current path.

According to some embodiments, a fused surge protective device includes a first electrode, a fuse device forming an overcurrent (fault current) protection circuit, a housing electrode including an end wall and an integral sidewall collectively defining a cavity, wherein the housing electrode may be monolithically formed of metal, a coupling electrode extending into the cavity, wherein the coupling electrode may include a borehole, a thermal actuator disposed in the borehole of the coupling electrode, a thermal disconnect mechanism disposed in the fuse device, and an overvoltage protection circuit disposed in the cavity between the housing electrode and the coupling electrode.

In some embodiments, the first electrode may form a first terminal, and the housing electrode may form a second terminal of the FSPD. The FSPD terminals may be configured to electrically connect cables (eg., L, GND) from the electrical power supply system to the FSPD. The FSPD terminals may also be configured to enable the mounting of the FSPD directly on the busbars or conductive plates.

In some embodiments, the fuse device may include an electrically insulating housing, a fusible element disposed in the fuse housing electrically connecting the first terminal and the coupling electrode, an electric arc extinguishing agent disposed in the fuse housing surrounding the fusible element, and the thermal disconnect mechanism disposed in the fuse housing. The fusible element may be configured to disintegrate and thereby disconnect the FSPD from the power source in response to a current exceeding a prescribed minimum fusing current of the fusible element for at least a prescribed duration.

In some embodiments, the electric arc extinguishing agent may be a flowable media.

In some embodiments, the flowable media may include silica granules or silica sand.

According to some embodiments, the fusible element may include a first end in electrical contact with the first terminal; the fusible element may include a second end in electrical contact with the coupling electrode.

According to some embodiments, the fusible element may include a first end and an opposing second end, the first end may be affixed to the first terminal, and the second end may be affixed to the coupling electrode.

In some embodiments, the fusible element may be a perforated metallic strip.

In some embodiments, the fusible element may be a serial (chain) connection of a plurality of metallic elements or portions having different electrical conductivity.

In some embodiments, the fusible element may include a plurality of branches configured to conduct current in parallel between the first and the second end.

According to some embodiments, the fusible element may include at least one preformed weak point, and the fusible element may be configured to disintegrate at the at least one preformed weak point, and thereby disconnect the first electrode from the second electrode, in response to a short circuit current exceeding a prescribed minimum fusing current of the fusible element for at least a prescribed duration.

In some embodiments, the fuse device may be configured to open an electrical connection between the first electrical terminal and the second electrical terminal responsive to carrying a short circuit current from the overvoltage protection circuit for not greater than a maximum short circuit response time threshold.

According to some embodiments, the thermal disconnect mechanism (TDM) may be configured to disconnect the overcurrent protection circuit in response to a current insufficient to disintegrate the fusible element.

In some embodiments, the thermal disconnect mechanism may include an electrically insulating carrier and a cutting element, which may be a spring-loaded cutting element, such as a spring-loaded cutter. The thermal disconnect mechanism may be configured to cut and break the fusible element, which may thereby disconnect the FSPD from the power supply. The disconnection of the FSPD may be in response to a temperature exceeding a prescribed trigger level of the thermal actuator for at least a prescribed duration but may also be remotely or locally activated by an operator, such as human operator or an external device.

In some embodiments, the insulating carrier may include an opening to receive and guide the fusible element throughout the insulating carrier, exposing the portion of the fusible element to the thermal disconnect mechanism, such as an exothermic agent and/or the cutting element, such as the spring-loaded cutter.

In some embodiments, the insulating carrier may include a main body, a guiding groove, and a cover.

In some embodiments, the cutting element, such as the spring-loaded cutter, may be disposed in the guiding groove. The cutting element, such as the spring-loaded cutter, may be operative to move and cut the fusible element when released/actuated by the thermal actuator and thereby disconnect the FSPD from the power source. The disconnection of the FSPD from the power source may be response to a temperature exceeding a prescribed trigger level of the thermal actuator for at least a prescribed duration but may also be remotely or locally activated by an operator, such as human operator or an external device.

According to some embodiments, the thermal actuator may include a main body, a piston, and an expandable agent. The expandable agent may be operative to expand and push the piston in the outward direction in response to a temperature increase.

In some embodiments, the expandable agent may comprise a polymer material.

In some embodiments, the expandable agent may comprise a gas or gas mixture.

In some embodiments, the expandable agent may comprise liquid.

In some embodiments, the expandable agent may comprise wax.

According to some embodiments, the thermal actuator may be a thermoelectric generator (TEG), such as a Seebeck generator. According to some embodiments, the thermal actuator may be a Peltier device/element. The thermal actuator may be operative to generate an electromotive force (charge) and electrically charge the thermal disconnect mechanism in response to a heat flow through the thermal actuator generated by the temperature increase of the overvoltage protection circuit but may also be remotely or locally activated by an operator, such as human operator or an external device.

In some embodiments, the thermal disconnect mechanism may include an exothermic (explosive) member attached to the fusible element, a control electronic circuit storing the electrical charge from the thermal actuator and providing an ignition signal, and an electrical connection, connecting the thermal actuator, the control circuit, and the exothermic member. The thermal disconnect mechanism may be configured to cut and break the fusible element and thereby disconnect the FSPD from the power supply in response to an electrical charge exceeding a prescribed trigger level for at least a specified duration but may also be remotely or locally activated by an operator, such as human operator or an external device.

In some embodiments, the FSPD may include a compressible member operative to compress and assert mechanical pressure on the coupling electrode, forming a high-pressure contact of the OPC with the coupling electrode and the housing electrode.

According to some embodiments, the compressible member may comprise a polymer material.

In some embodiments, the compressible member may be formed of rubber.

In some embodiments, the compressible member may be formed of silicone.

In some embodiments, the compressible member may comprise a spring.

According to some embodiments, the compressible member may be formed of an electrically insulating material.

According to some embodiments, the overvoltage protection circuit may comprise at least one active voltage-switching/limiting component.

In some embodiments, the at least one active voltage-switching/limiting component may comprise a varistor.

According to some embodiments, the at least one active voltage-switching/limiting component may comprise a gas discharge tube.

According to some embodiments, the at least one active voltage-switching/limiting component may comprise a diode.

According to some embodiments, the at least one active voltage-switching/limiting component may comprise a thyristor.

According to some embodiments, the at least one active voltage-switching/limiting component may comprise a spark gap.

According to some embodiments, the spark gap may be a horn spark gap assembly.

Further benefits and advantages of the present invention will become apparent after a careful reading of the detailed description with appropriate reference to the accompanying drawings.

### Brief Description of the Drawings

The accompanying drawings, which form a part of the specification, illustrate embodiments of the present invention.
FIG. 1 is a block diagram that illustrates a conventional surge protective device (SPD) configuration.
FIG. 2 is a block diagram that illustrates a fused surge protective device configuration in accordance with prior art.
FIG. 3 is a block diagram that illustrates a configuration of the thermal disconnect mechanisms of the SPDs in accordance with prior art.
FIG. 4 is a block diagram of a fused surge protective device (FSPD) in accordance with some embodiments of the inventive concept.
FIG. 5 is a block diagram of a fused surge protective device (FSPD) in accordance with some embodiments of the inventive concept.
FIG. 6 is a block diagram of a fused surge protective device (FSPD) in accordance with some embodiments of the inventive concept.
FIG. 7 is a front view of the FSPD of FIG. 5
FIG. 8 is an exploded, perspective view of the FSPD of FIG. 7.
FIG. 9 is a cross-sectional view of the FSPD of FIG. 7 taken along the line A-A of FIG. 7 in a ready position.
FIG. 10 is an exploded fragmentary, top perspective view of the FSPD of FIG. 7.
FIG. 11 is a fragmentary, perspective view of the FSPD of FIG. 7.
FIG. 12 is a fragmentary, top perspective view of the FSPD of FIG. 7.
FIG. 13 is a cross-sectional view of the thermal actuator in accordance with some embodiments of the inventive concept taken along the line A-A of FIG. 7 in a ready position.
FIG. 14 is a cross-sectional view of the FSPD of FIG. 7 taken along the line A-A of FIG. 7 illustrating operation of the FSPD in a fault current disconnection event.
FIG. 15 is a front view of the fusible element in accordance with some embodiments of the inventive concept.
FIG. 16 is a side view of the fusible element in accordance with some embodiments of the inventive concept.
FIG. 17 is a fragmentary, cross-sectional view of the FSPD of FIG. 7 taken along the line A-A of FIG. 7 illustrating operation of the FSPD in a thermal disconnection event.
FIG. 18 is a fragmentary, top perspective view of the FSPD of FIGS. 19 and 20.
FIG. 19 is an exploded, perspective view of the FSPD of FIG. 20.
FIG. 20 is a front view of the FSPD in accordance with some embodiments of the inventive concept.
FIG. 21 is a cross-sectional view of the FSPD of FIG. 20 taken along the line A-A of FIG. 20 in a ready position.
FIG. 22 is a fragmentary, cross-sectional view of the FSPD of FIG. 20 taken along the line A-A of FIG. 20 illustrating operation of the FSPD in a thermal disconnection event.
FIG. 23 is a block diagram of a fused surge protective device (FSPD) in accordance with some embodiments of the inventive concept.
FIG. 24 is a front view of the FSPD of FIG. 23.
FIG. 25 is an exploded, perspective view of the FSPD of FIG. 24.
FIG. 26 is a cross-sectional view of the FSPD of FIG. 24 taken along the line A-A of FIG. 24 in a ready position.
FIG. 27 is a fragmentary, cross-sectional view of the FSPD of FIG. 24 taken along the line A-A of FIG. 19 illustrating operation of the FSPD in a thermal disconnection event.
FIG. 28 is a fragmentary, perspective view of the FSPD of FIG. 24.
FIG. 29 is a fragmentary, perspective view of the FSPD of FIG. 24.
FIG. 30 is a perspective view of a fused surge protective device (FSPD) in accordance with some embodiments of the inventive concept.
FIG. 31 is a fragmentary, top perspective view of the FSPD of FIG. 30.
FIG. 32 is a fragmentary, front view of the FSPD of FIG. 30

### Detailed Description

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It is noted that aspects described with respect to one embodiment may be incorporated in different embodiments although not specifically described relative thereto. That is, all embodiments and/or features of any embodiments can be implemented separately or combined in any way and/or combination. Moreover, other apparatus, methods, and systems according to embodiments of the inventive concept will be or become apparent to one with skill in the art upon review of the following drawings and detailed description. It is intended that all such additional apparatus, methods, and/or systems be included within this description, be within the scope of the present inventive subject matter, and be protected by the accompanying claims.

As used herein, "monolithic" means an object that is a single, unitary piece formed or composed of a material without joints or seams.

As used herein, "unitary" means an object composed of multiple parts or components secured together at joints or seams forming a stand-alone unit, which cannot be partially decomposed or disassembled therefore reduced to form a derivative stand-alone unit operative partially or differently. That is to say a device is not unitary when it is operative differently or partially if single or multiple components are removed or detached from the full composition.

As used herein, "electro-thermo-mechanically coupled" means a mutually dependent and interconnected operation of the fuse device, thermal actuator, thermal disconnect mechanism, and overvoltage protection circuit.

As used herein, "thermal actuator" means a device or a component that produces mechanical force, torque, or displacement, or an electromotive force when heat is supplied to it.

Embodiments of the inventive concept are described herein with respect to surge protection for electrical power lines or cables. An "electrical power line or cable" as used herein means any kind of medium configured to carry electrical power from a power supply to a device or equipment that consumes the electrical power.

Some embodiments of the inventive concept stem from a realization that fuses or circuit breakers used to protect surge protective devices (SPDs) from short circuit currents when they fail by disconnecting them from the power source do not generally guarantee hazard-free operation.

Some embodiments of the inventive concept also stem from a realization that internally fused surge protective devices (FSPDs) do not generally guarantee hazard-free operation when they disconnect from the power source due to negative mutual effects of the fuse and the overvoltage protection components integrated within FSPDs.

According to some embodiments of the inventive concept, an overvoltage protection circuit is mechanically coupled with a fuse device to form a unitary construction of a fused surge protective device, guaranteeing a hazard-free operation. The FSPD may include a thermal actuator and a thermal disconnect mechanism integrated into the unitary composition of the FSPD to provide electro-thermo-mechanical coupling of the fuse device and the overvoltage circuit.

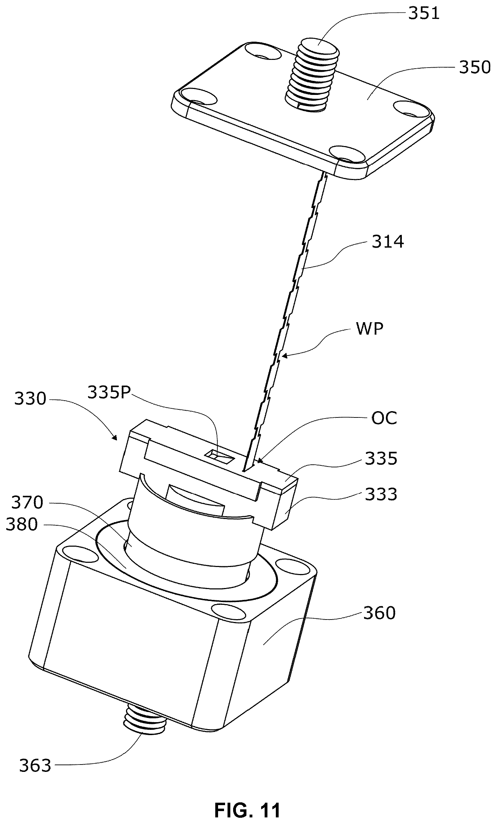

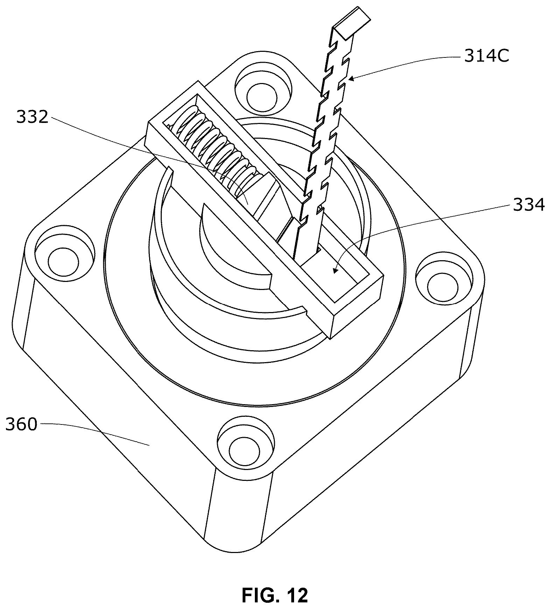

With reference to FIGS. 4-17, a fused surge protective device (FSPD) 300, according to some embodiments, is shown therein. The FSPD 300 may be provided, installed, and used as a stand-alone component in a protection circuit of a power supply circuit as described above with reference to FIGS. 1 and 2 in place of the externally fused SPD 100 or internally fused SPD 200, for example, to form a protected power supply circuit, as shown in FIGS. 1 and 2.

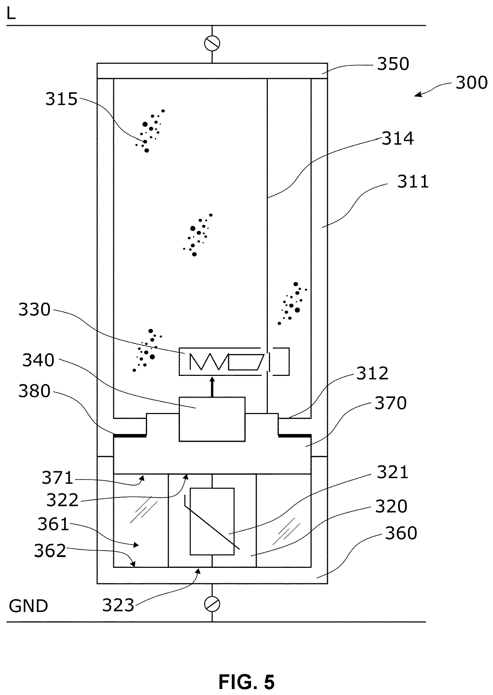

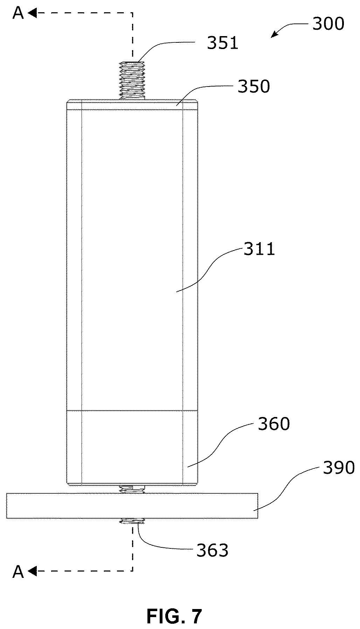

In some embodiments, a fuse device 310, an overvoltage protection circuit (OPC) 320, a thermal disconnect mechanism (TDM) 330, and a thermal actuator (TA) 340 are mechanically and electrically integrated into the unitary device to form the unitary FSPD 300 as illustrated in FIGS. 5-14. In some embodiments, the FSPD 300 device is configured to mount on a busbar 390, as shown in FIG. 7, for example.

With reference to FIGS. 4-6, the FSPD 300 includes a first electrode 350, the fuse device 310, a housing electrode 360, a coupling electrode 370, the thermal actuator 340, the thermal disconnect mechanism 330, and the OPC 320.

The OPC 320 may be any suitable overvoltage protection circuit. In some embodiments, the OPC 320 includes a voltage-switching or voltage-limiting component (referred to herein as a "voltage-switching/limiting component) 321.

In some embodiments, the OPC 320 is a varistor-based overvoltage protection circuit, and the voltage-switching/limiting component 321 is a varistor (MOV).

In some embodiments, the voltage-switching/limiting component 321 is a gas discharge tube (GDT).

In some embodiments, the voltage-switching/limiting component 321 is a spark gap (SG).

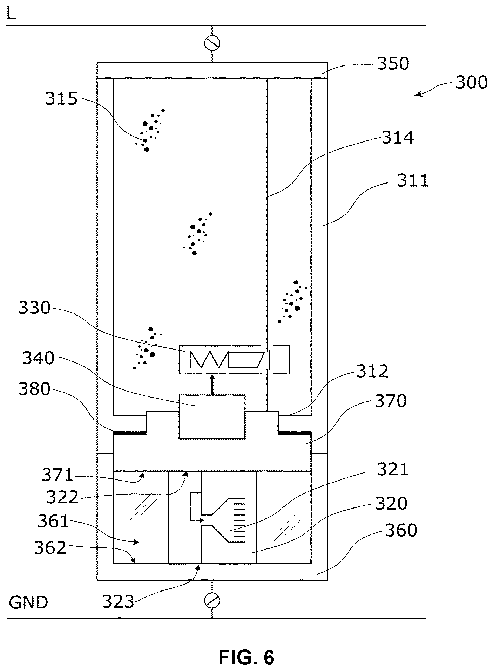

In some embodiments, the voltage-switching/limiting component 321 is a horn spark gap (HSG) (FIG. 6).

The voltage-switching/limiting component 321 may also be another type of voltage-switching/limiting component. Other types of voltage-switching/limiting component 321 that may form, or form a part of the OPC 320 may include diodes, thyristors, multi-cell spark gaps or multi-cell GDTs.

The OPC 320 may include a plurality of voltage-switching/limiting components 321. The OPC 320 may include one or more voltage-switching/limiting components 321 in combination with other electrical components.

In some embodiments, the OPC 320 includes multiple MOVs connected in electrical parallel or series.

In some embodiments, the OPC 320 includes multiple GDTs connected in electrical parallel or series.

In some embodiments, the OPC 320 includes multiple SGs connected in electrical parallel or series.

In some embodiments, the OPC 320 includes multiple HSGs connected in electrical parallel or series.

In some embodiments, the OPC 320 includes a combination of MOV(s), GDT(s), and/or other circuit elements, such as resistors, inductors, or capacitors, connected in electrical parallel or series.

In some embodiments, the OPC 320 includes a combination of MOV(s), SG(s), and/or other circuit elements, such as resistors, inductors, or capacitors, connected in electrical parallel or series.

In some embodiments, the OPC 320 includes a combination of MOV(s), HSG(s), and/or other circuit elements, such as resistors, inductors, or capacitors, connected in electrical parallel or series.

MOVs, SGs, HSGs, and GDTs may be used in surge protective devices, wherein each component has advantages and drawbacks. Typically, SGs, HSGs, and GDTs can conduct higher surge currents without overheating and damage, thus their lifetime expectancy is increased relative to MOVs. Additionally, in standby or ready state, these components do not conduct any current, providing so-called leakage-free operation of the SPD. However, when triggered, GDTs cannot extinguish the so-called follow current, thus limiting their usage between line-to-neutral protection mode only in series connection with MOVs. Typically, GDTs are used for the neutral-to-ground protection mode. SGs and HSGs typically have the follow current extinguishing capability, thus enabling their usage in line-to-neutral or line-to-ground protection modes. However, the time needed for SGs to return to ready (e.g., non-conducting state) after the surge event is longer relative to the MOVs. Longer recovery time may pose additional stress to the power system. During the surge event, MOVs will transition to a low-impedance state and return to a non-conductive state with no follow currents. However, even in a non-conductive state, the MOVs still conduct certain leakage currents, which is typically not desirable. The leakage current increase over time may lead to the degradation and failure of the MOVs. This leakage current may generate a sufficient amount of heat, thus, according to some embodiments of the inventive concept, the thermal disconnect mechanism (TDM) 330, in combination with the thermal actuator (TA) 340, is used to reduce the risk of damage by disconnecting the FSPD 300 from the power source. The TDM 330 and TA 340 may also be used to disconnect the FSPD 300 from the power source when MOVs, SGs, GDTs, HSGs, or other OPC's 320 components experience malfunction and generate excessive heat.

An MOV is a semiconductive electronic component typically in the form of a ceramic disc produced by sintering of a mixture of a base metal oxide powder (typically zinc oxide (ZnO)) with other metal oxide powders such as bismuth oxide and others. GDTs are voltage-switching components formed of an electrically insulating tubular body (typically ceramic), two electrodes, and a gas mixture hermetically sealed in the cavity of the insulating body. SGs, including HSGs, are devices typically composed of two main electrodes, an electrically insulating housing, and a triggering circuit, which may contain MOVs, GDTs, and other components typically physically much smaller relative to the main SG. SGs are not hermetically sealed units typically expelling the electric arc and plasma outside the housing during surge events.

As indicated above, the OPC 320 typically fails in a short circuit, where such a failure is accompanied by excessive heat, material evaporation, and arcing, causing abnormal pressure and thermo-mechanical stress to the FPSD 300.

According to some embodiments of the inventive concept, and with reference to FIGS. 4-13, the OPC 320 is disposed in a cavity 361 of the housing electrode 360, wherein the coupling electrode 370 is partially disposed in the fuse housing 311 and is supported by a compressible member 380 disposed on a supporting protrusions 312 of the fuse housing 311, and a first contact 322 of the OPC 320 is in electrical contact with a bottom side 371 of the coupling electrode 370 and the second contact 323 of the OPC 320 is in electrical contact with an end wall 362 of the housing electrode 360. The housing electrode 360 is configured to be fastened to the fuse housing by a screws 301 being screwed into a receiving threaded bores 313 of the fuse housing 311. The screws apply relatively high force on the housing electrode 360 tightly compressing the OPC 320, the coupling electrode 370, and the compressible member 380 against supporting protrusions 312 of the fuse housing 311, wherein the compressible member 380 acts as a pressure regulator forming semi-rigid joint of the coupling electrode 370 with OPC 320, and fuse housing 311. This confines the OPC 320 in a mechanically endurable enclosure operative to resist and contain excessive heat, arcing, abnormal pressure, and mechanical stress during OPC 320 failure for at least the time needed for the fuse device 310 or TDM 330 operate and thereby disconnect FSDP 300 from the power source.

According to some embodiments of the inventive concept, and with reference to FIGS. 5-9, the fuse device includes an electrically insulating housing 311, a fusible element 314 disposed in the fuse housing 311, an electric arc extinguishing agent 315 disposed in the fuse housing 311 surrounding the fusible element 314, and a thermal disconnect mechanism 330 disposed in the fuse housing 311. The fusible element 314 electrically connects the fist terminal 351 with the coupling electrode 370, thereby providing a fused connection of the OPC 320 with the power source (cables).

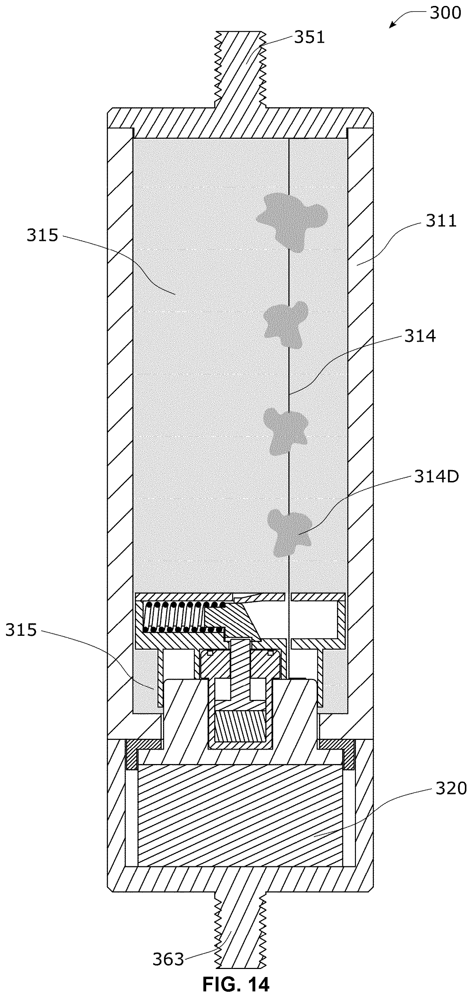

As discussed above, the OPC 320 may fail as a short circuit, which causes the power source to supply the FSPD 300 with a relatively high fault current (e.g., in the range of from about hundreds of amps to tens of kA, depending on the prospective current of the point of the installation of the FSPD). With reference to FIGS. 5, 14 and 15, the fusible element 314 is configured to disintegrate and thereby disconnect the FSPD from the power supply in response to the fault current. More particularly, the fault current heats the fusible element 314, eventually causing one or more weak points WP to melt, leading to electrical arcing. The arcing causes a portion or the entirety of the fusible element to rapidly evaporate and disintegrate 314D. The arc extinguishing agent 315 reacts with the electrical arc (plasma) and with the evaporation 314D of the material from the fusible element 314, which causes the electrical arcing to lose energy (heat) and be extinguished. The fuse device 310 is now open, and the fault current therethrough has been interrupted. The fuse device 310 is now in an open state, and FSPD 300 is disconnected from the power source (FIG. 14).

According to some embodiments of the inventive concept, and with reference to FIGS. 5-9, the unitary assembly of the fuse device 310, first electrode 350, and the coupling electrode 370 enclosed by the housing electrode 360 provide a mechanically endurable and rigid construction operative to resist and contain excessive heat, arcing, abnormal pressure, and thermo-mechanical stress during fusible element 314 disintegration and fault current interruption.

The fuse housing 311 may be formed of any suitable electrically insulating material. In some embodiments, the fuse housing 311 is formed of ceramic. In some embodiments, the fuse housing 311 is formed of composite materials. In some embodiments, the fuse housing 311 is formed of polymeric materials. In some embodiments, the fuse housing 311 is formed of two-layer material, wherein a first layer is formed of ceramic and a second layer is formed of composite or polymeric material. The first layer is the inner layer of the fuse housing.

The electric arc extinguishing agent 315 may be formed of any suitable material. In some embodiments, the arc extinguishing agent 315 is flowable granules. In some embodiments, the electric arc extinguishing agent 315 is silica granules (silicon dioxide).

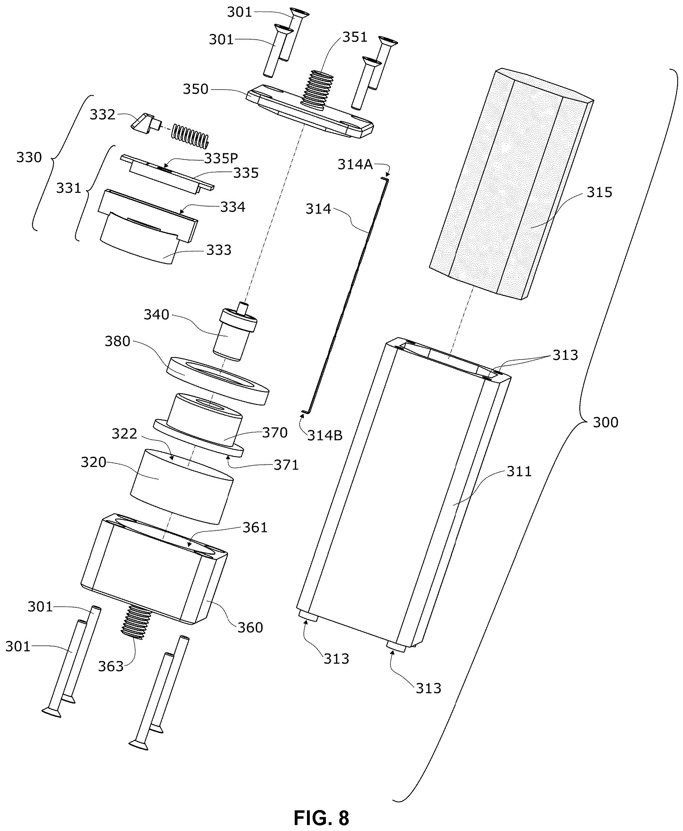

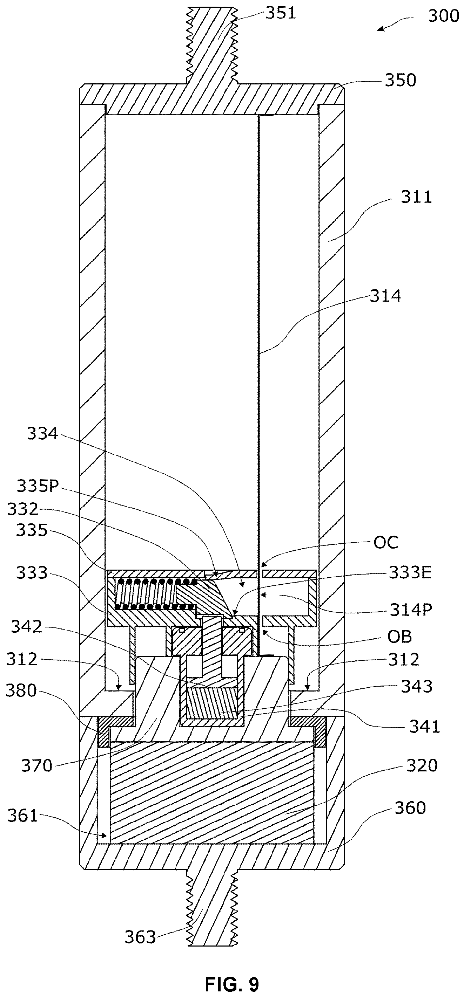

According to some embodiments, and with reference to FIGS. 8 and 9, the fusible element 314 includes a first end 314A in electrical contact with the first electrode/terminal 350, 351; the fusible element includes a second end 314B in electrical contact with the coupling electrode 370, the first end 314A being affixed to the first electrode/terminal 350, 351, and the second end 314B being affixed to the coupling electrode 370.

The fusible element 314 may be formed of any suitable material and in any suitable shape. In some embodiments, the fusible element 314 is a metallic strip. In some embodiments, the fusible element 314 is a perforated metallic strip.

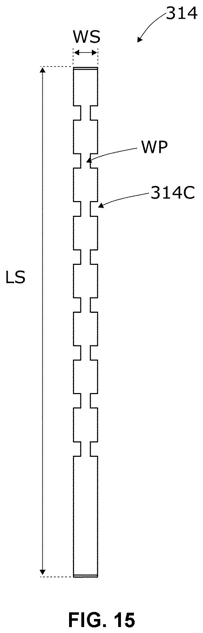

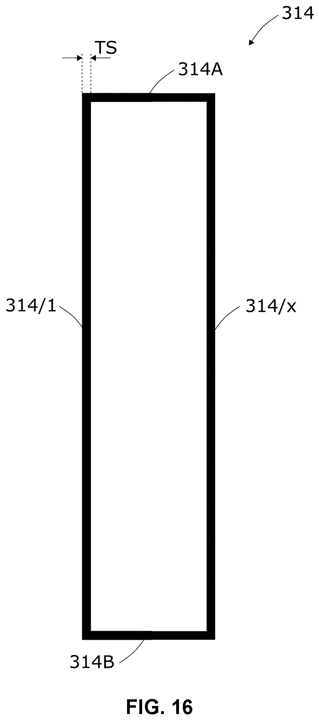

In some embodiments, and with reference to FIGS. 15 and 16, the fusible element has a strip width WS in the range of from about 1 mm to 10 mm, a strip length LS in the range of from about 10 mm to 200 mm, and a strip thickness TS in the range of from about 0.05 mm to 1 mm.

In some embodiments, and with reference to FIG. 15, the fusible element has a plurality of preformed weak points WP, wherein the weak points WP may be formed by side edge cutouts 314C defined in the strip. The cutouts 314C reduce the width of the fusible element. The spatially distributed WP along the length LS of the fusible element 314 may then cause a spatially distributed electrical arcing, which is favorable in reducing thermo-mechanical stress on the FSDP 300 during fault current interruption. In some embodiments, the fusible element is a serial (chain) connection of a plurality of metallic elements or portions having different electrical conductivity. In some embodiments, and with reference to FIG. 16, the fusible element includes a plurality of branches configured 314/1, 314/x to conduct current in parallel between the first and second end 314A, 314B of the fusible element.

As discussed above, during the ready state, the FSPD 300 does not conduct current, or it only conducts leakage current, and the fuse device 310 therefore is in a closed state as shown in FIG. 9. As indicated above, when a surge event applies a surge impulse current to the FSPD 300, the OPC 320 will transition to low-impedance (conducting state) and shunt the surge current to the ground. The surge current may be on the order of tens of kA but typically lasts only in the range of from about tens of microseconds to a few milliseconds. The fuse element 314 is capable of conducting this surge current without disintegrating, thereby keeping the fuse device 310 in a closed state (FIG. 9), thus, the FSPD 300 remains in a ready state for further operation.

As discussed above, the OPC 320 may degrade, subsequently increasing the leakage current. An increase of the leakage current over time may lead to the degradation and failure of the OPC 320 in a manner that the fault current is limited below a minimum fusing current of the fusible element 314, thus keeping the FSPD 300 connected to the power source. Under certain circumstances, the power source (low power source with limited prospective current) itself may limit the fault current below the minimum fusing current, thus keeping the FSPD 300 connected to the power source even if the OPC 320 fails in the short circuit. According to some embodiments, the limited fault current is interrupted by the thermal disconnect mechanism (TDM) 330 and the thermal actuator (TA) 340 configured in a electro-thermo-mechanically coupled conjunction with the fuse device 310 thus disconnecting the FSPD 300 from the power source.

According to some embodiments of the inventive concept, and with reference to FIGS. 8-12, the thermal disconnect mechanism (TDM) 330 includes an electrically insulating carrier 331 and a spring-loaded cutter 332, wherein the insulating carrier 331 comprises a main body 333, a guiding groove 334, and a cover 335. The main body 333 and the cover 335 have an openings OC, OB to receive and guide the fusible element through the insulating carrier 331, exposing a cutting portion 314P of the fusible element 314 to the spring-loaded cutter 332. The spring-loaded cutter 332 is disposed in the guiding groove 334 and held in a tensioned position by a protrusion 335P and a stopping edge 333E of the main body 333.

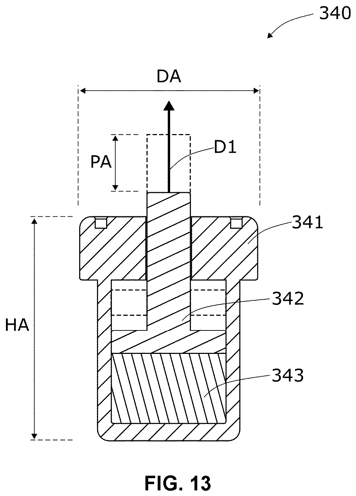

According to some embodiments of the inventive concept, and with reference to FIGS. 9 and 13, the thermal actuator 340 includes a main body 341, a piston 342, and an expandable agent 343.

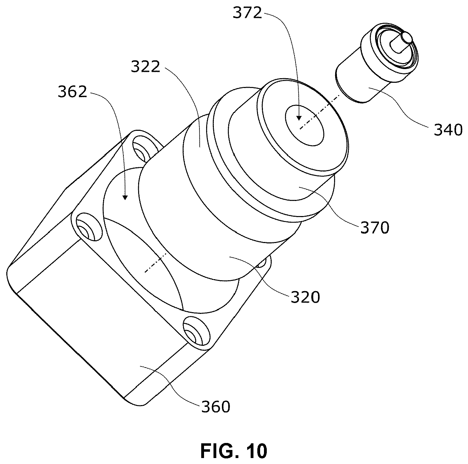

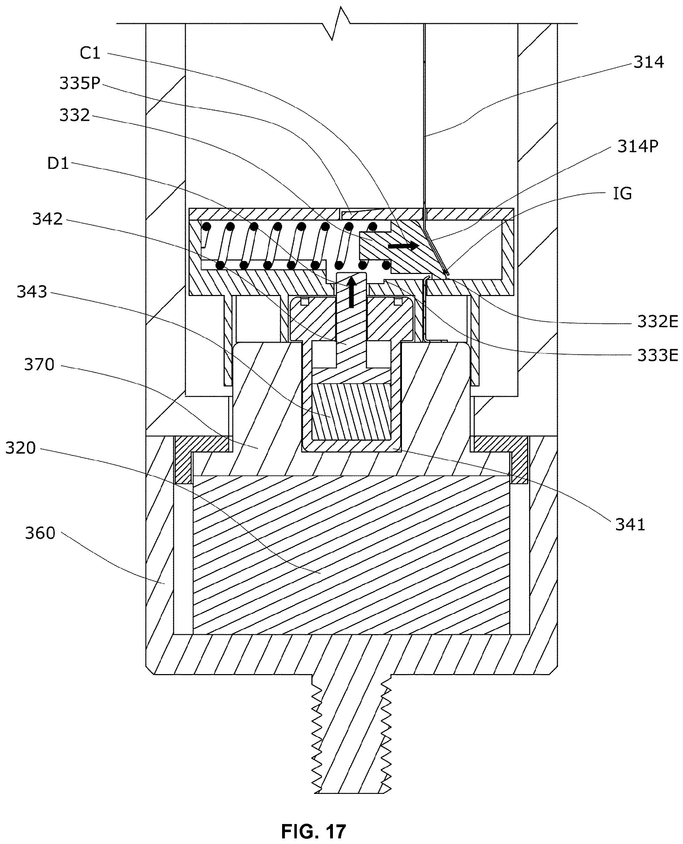

In some embodiments, and with reference to FIGS. 9 and 10, the thermal actuator 340 is disposed in the borehole 372 of the coupling electrode 370, creating good thermal contact with the coupling electrode 370 and OPC 320. As indicated above, when FSPD 300 exhibits limited fault current failure, the fusible element 314 may not interrupt it; thus, the OPC 320 will experience heat buildup and temperature increase. With reference to FIGS. 9 and 17, the heat is transferred to the thermal actuator 340, causing the expandable agent 343 to expand and push the piston 342 in the outward direction D1. The movement of the piston 342 in the direction D1 bends the protrusion 335P and moves the spring-loaded cutter 332 in the direction D1, unhooking the spring-loaded cutter edge 332E from the stopping edge 333E thus, releasing the spring-loaded cutter 332, which moves along the guiding groove 334 in the cutting direction C1. The movement of the cutter 332 has sufficient force so that the cutter 332 mechanically cuts and breaks the portion of the fusible elements 314P, creating the isolating gap IG, thereby disconnecting the FSPD 300 from the power source. With the explained operation of the TA 340, TDM 330, and FD 310, the electro-thermo-mechanical coupling of the OPC 320 and FD 310 is achieved to form the unitary construction of the FSPD 300, operating in the hazard-free manner.

In some embodiments, the thermal actuator 340 has a cylindrical shape with a diameter DA in the range of from about 5 mm to 20 mm (FIG. 13).

In some embodiments, the thermal actuator 314 has a cylindrical shape with a height HA in the range of from about 5 mm to 40 mm (FIG. 13).

In some embodiments, the thermal actuator 340 has a piston 342 with an operating displacement PA in the range of from about 0 mm to 10 mm (FIG. 13).

In some embodiments, the piston provides the force in the range of from about 1 N to 500 N.

In some embodiments, the expandable agent 343 is a polymer material.

In some embodiments, the expandable agent 343 is a gas or gas mixture.

In some embodiments, the expandable agent 343 is liquid.

In some embodiments, the expandable agent 343 is wax.

With reference to FIGS. 8-12, in some embodiments, the FSPD includes a compressible member 380 disposed in the fuse housing 310. As explained above, the compressible member 380 is configured to create a non-rigid junction of the coupling electrode 370 with the OPC 320 and the housing electrode 360 by acting as an aligning stress-relief element. The thickness and the compression rate of the compressible member 380 define a contact force of the OPC 320 with the coupling and housing electrodes 370 and 360.

In some embodiments, a contact force is in the range of from about 10 N to 10000 N.

In some embodiments, the compressible member 380 is polymer material.

In some embodiments, the compressible member 380 is formed of a rubber.

In some embodiments, the compressible member 380 is formed of silicone.

In some embodiments, the compressible member 380 is a metal spring.

According to some embodiments, the compressible member 380 is an electrically insulating material.

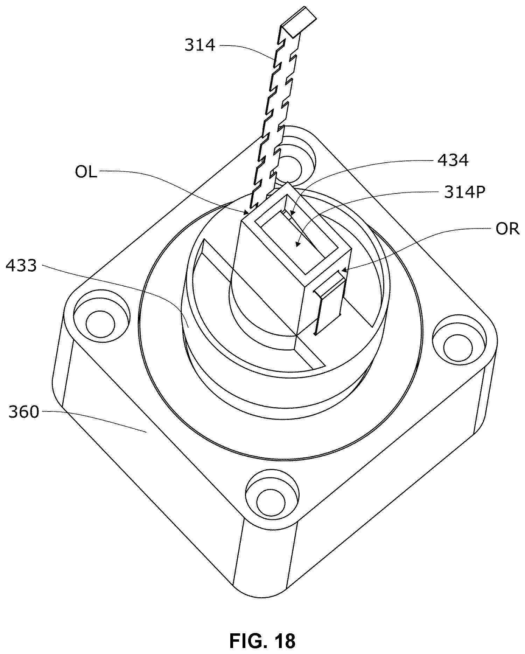

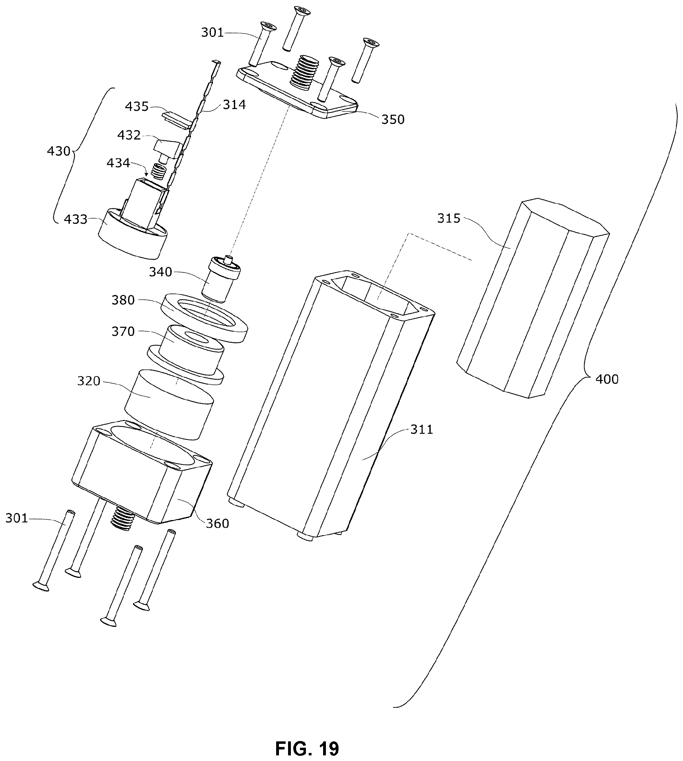

With reference to FIGS. 18 and 19, a thermal disconnect mechanism (TDM) 430 according to further embodiments is shown therein. The TDM 430 may be constructed, installed and used in the same manner as described for the thermal disconnect mechanism 330, except as discussed below. For example, the TDM 430 may be used in place of the TDM 330 in the FSPD 300.

According to some embodiments of the inventive concept, and with reference to FIGS. 18 and 19, the thermal disconnect mechanism (TDM) 430 includes an electrically insulating carrier 431 and a spring-loaded cutter 432, wherein the insulating carrier 431 comprises a main body 433, a guiding groove 434, and a cover 435. The main body 433 includes an openings OL, OR to receive and guide the fusible element through the insulating carrier 431, exposing the cutting portion 314P of the fusible element 314 to the spring-loaded cutter 432. The spring-loaded cutter 432 is disposed in the guiding groove 434 and held in a tensioned position by the cutting portion 314P of the fusible element 314. The spring-loaded cutter 432 is configured so it cannot cut the fusible element 314 without the additional force supplied by the thermal actuator 340, as discussed below.

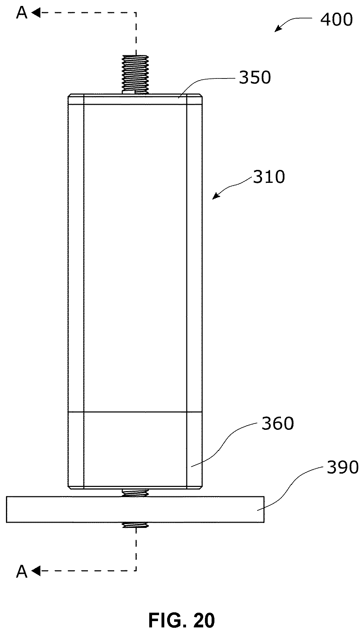

With reference to FIGS. 20-22, a fused surge protective device (FSPD) 400 according to further embodiments is shown therein. The FSPD 400 includes the thermal disconnect mechanism (TDM) 430 integrated therein.

The FSPD 400 may be provided, installed, and used as a stand-alone component in a protection circuit of a power supply circuit as described above with reference to FIGS. 1 and 2 in place of the externally fused SPD 100 or internally fused SPD 200, for example, to form a protected power supply circuit, as shown in FIGS. 1 and 2.

According to further embodiments, a fuse device 310, an overvoltage protection circuit (OPC) 320, a thermal disconnect mechanism (TDM) 430, and a thermal actuator (TA) 340 are electro-thermo-mechanically integrated into the unitary device to form the unitary FSPD 400. In some embodiments, the FSPD 400 device is configured to mount on a busbar 390, as shown in FIG. 20, for example.

With reference to FIGS. 20-22, the FSPD 400 includes a first electrode 350, the fuse device 310, a housing electrode 360, a coupling electrode 370, the thermal actuator 340, the thermal disconnect mechanism 430, and the OPC 320. It will be appreciated that the fuse device 310, the overvoltage protection circuit (OPC) 320, the thermal disconnect mechanism (TDM) 430, the thermal actuator (TA) 340 and the FSPD 400 function and operate in the same manner as described herein for the FSPD 300, except as discussed below.

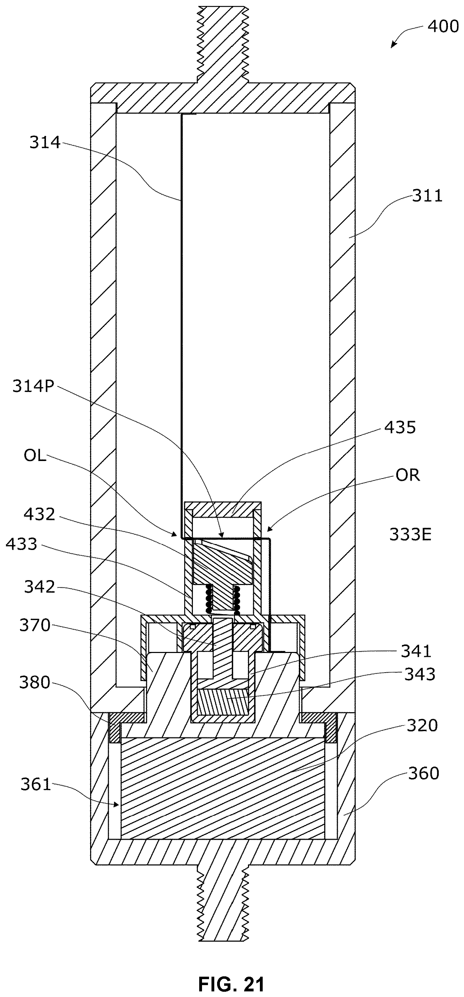

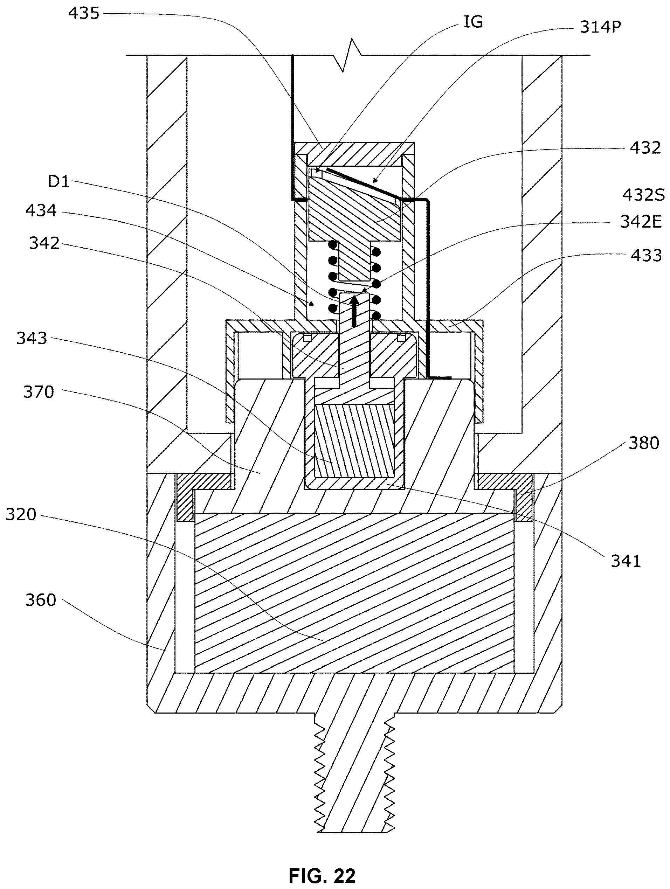

As discussed for the FPSD 300, the FSPD 400 may as well exhibit limited fault current failure, wherein the fusible element 314 may not interrupt it; thus, the OPC 320 will experience heat buildup and temperature increase. With reference to FIGS. 21 and 22, the heat is transferred to the thermal actuator 340, causing the expandable agent 343 to expand and push the piston 342 in the outward direction D1. The movement of the piston 342 in the direction D1 supplies the spring-loaded cutter with additional force, either through spring tension or direct contact of the piston end-side 342E and cutter spring-side 432S. The spring-loaded cutter 432, supplied by additional force from TA 340, now moves in the guiding groove 434 in the direction D1 with sufficient force to mechanically cut and break the portion of the fusible elements 314P, creating the isolating gap IG, thereby disconnecting the FSPD 400 from the power source. Additionally, if the movement of the piston 342 stops when the portion of the fusible elements 314P is partially cut, thus before creating the isolating gap IG, the spring-loaded cutter 432 is operative to move in the direction D1 and create the isolating gap IG by releasing the mechanical energy stored in the tensioned spring.

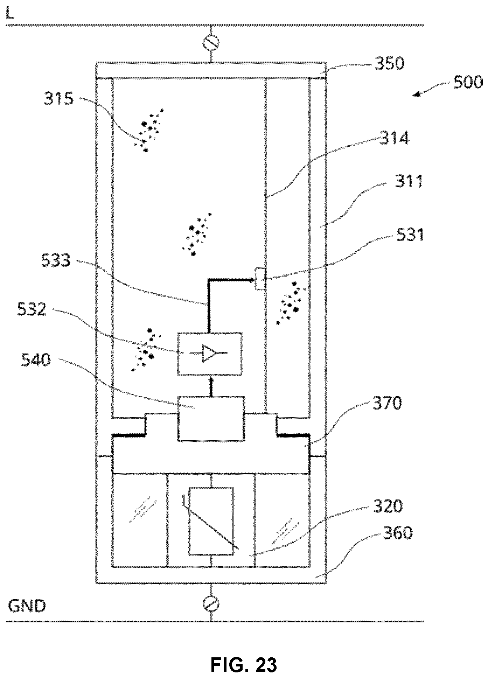

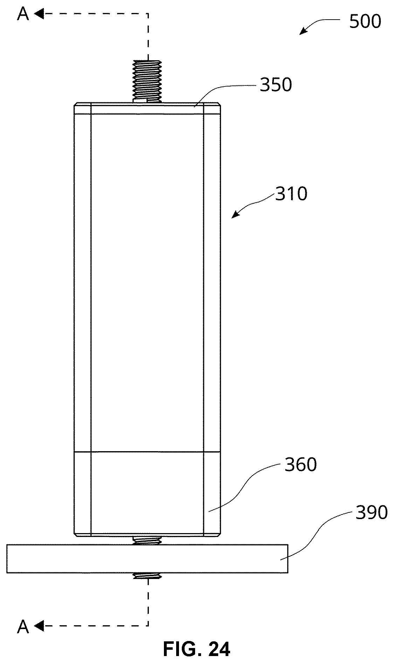

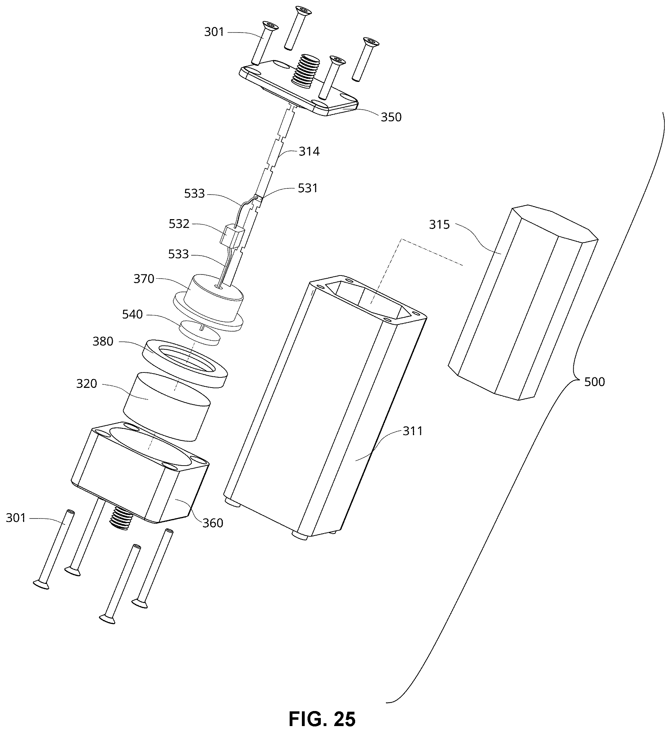

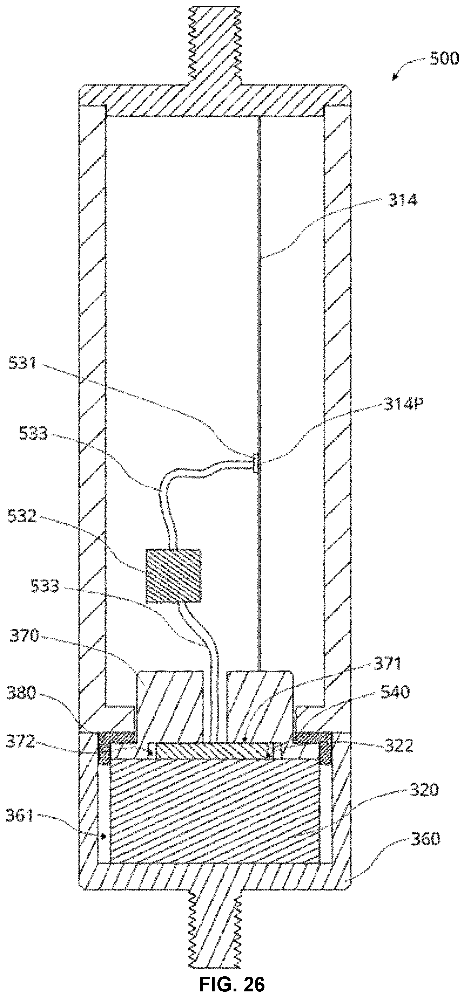

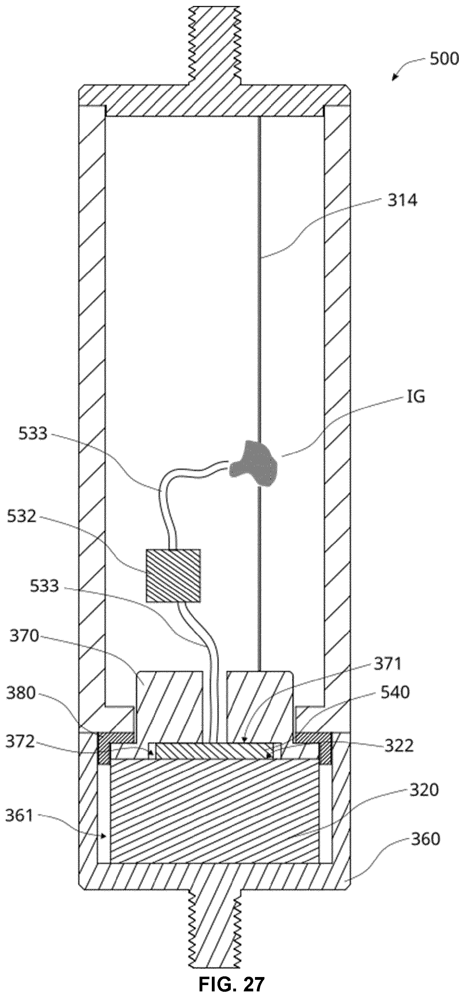

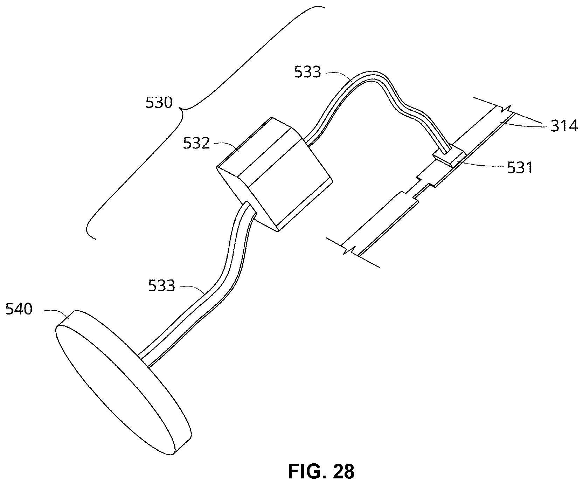

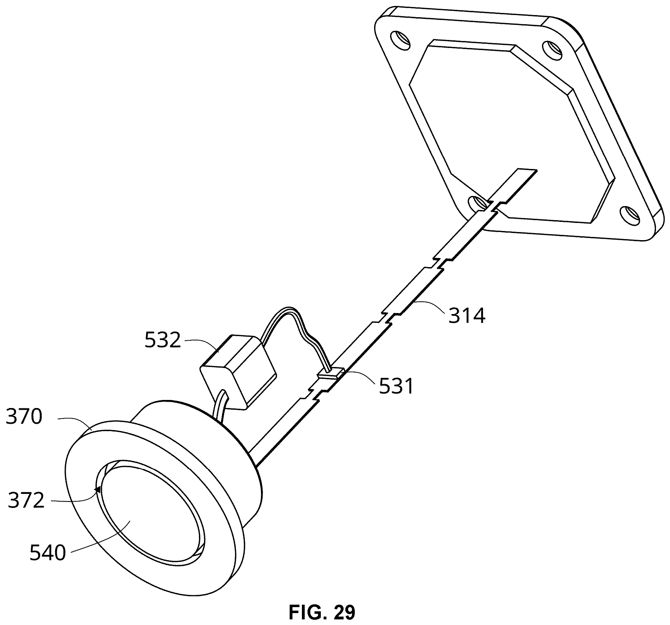

With reference to FIGS. 23-29, a fused surge protective device (FSPD) 500, according to further embodiments, is shown therein. The FSPD 500 includes a thermal disconnect mechanism (TDM) 530 and a thermal actuator (TA) 540 integrated therein.

The FSPD 500 may be provided, installed, and used as a stand-alone component in a protection circuit of a power supply circuit as described above with reference to FIGS. 1 and 2 in place of the externally fused SPD 100 or internally fused SPD 200, for example, to form a protected power supply circuit, as shown in FIGS. 1 and 2.

According to further embodiments, a fuse device 310, an overvoltage protection circuit (OPC) 320, a thermal disconnect mechanism (TDM) 530, and a thermal actuator (TA) 540 are electro-thermo-mechanically integrated into the unitary device to form the unitary FSPD 500.

With reference to FIGS. 23-29, the FSPD 500 includes a first electrode 350, the fuse device 310, a housing electrode 360, a coupling electrode 370, the thermal actuator 540, the thermal disconnect mechanism 530, and the OPC 320. It will be appreciated that the fuse device 310, the overvoltage protection circuit (OPC) 320, the thermal disconnect mechanism (TDM) 530, the thermal actuator (TA) 540, and the FSPD 500 function and operate in the same manner as described herein for the FSPD 300 and FSPD 400, except as discussed below.

With reference to FIGS. 23-29, a thermal disconnect mechanism (TDM) 530 and thermal actuator (TA) 540 according to further embodiments are shown therein.

According to some embodiments of the inventive concept, and with reference to FIGS. 22 -29, the thermal actuator 540 is a thermoelectric generator (TEG). The thermal actuator 540 is disposed in the borehole 372 of the coupling electrode 370, wherein a hot side of the TA is in thermal contact with the first contact 322 of the OPC 320, and a cold side of the TA 540 is in thermal contact with the bottom side 371 of the coupling electrode 370.

According to some embodiments of the inventive concept, and with reference to FIGS. 22 -29, the thermal disconnect mechanism (TDM) 530 includes an exothermic member 531, a control electronic circuit 532, and an electrical connection (cables) 533 electrically connecting the thermal actuator 540, the control circuit 532 and the exothermic member 531. The exothermic member 531 is placed on the cutting portion 314P of the fusible element 314.

As discussed for the FPSD 300 and 400, the FSPD 500 may as well exhibit limited fault current failure, wherein the fusible element 314 may not interrupt it; thus, the OPC 320 will experience heat buildup and temperature increase. With reference to FIGS. 23-29, the heat is transferred to the thermal actuator 540, causing the generation of the electromotive force charging the control circuit 532. The control circuit provides the ignition signal to the exothermic member, which exothermically metals and breaks the portion of the fusible elements 314P, creating the isolating gap IG, thereby disconnecting the FSPD 500 from the power source. With the explained operation of the TA 540, TDM 530, and FD 310, the electro-thermo-mechanical coupling of the OPC 320 and FD 310 is achieved to form the unitary construction of the FSPD 500, operating in a hazard-free manner.

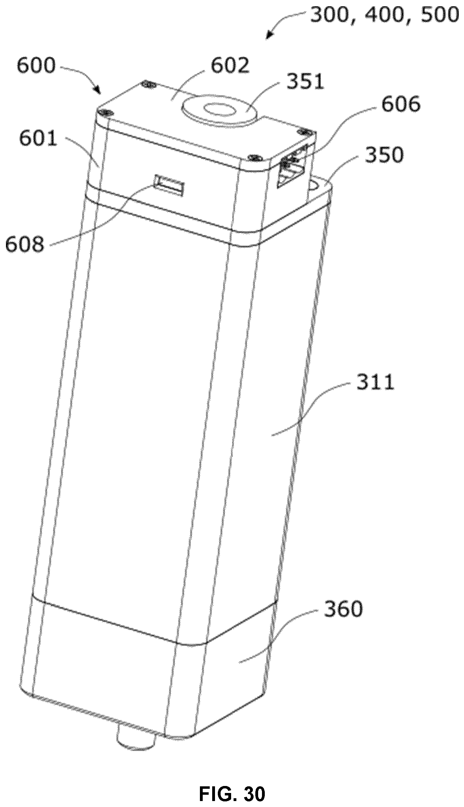

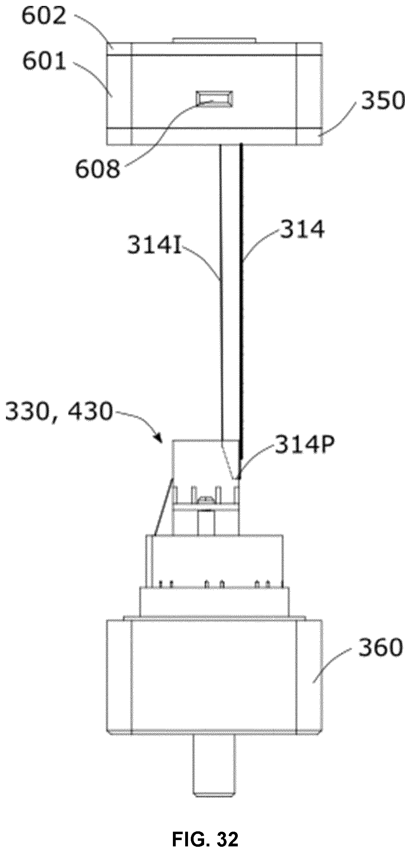

With reference to FIGS. 30-32, a fused surge protective device (FSPD) 300, 400 and 500, according to further embodiments, are shown therein. The FSPD 300, 400, and 500 may optionally include an indication fusible element 314I and an indication device 600. The indication fusible element 314I is disposed in the fuse housing 311 in parallel electrical connection with the fusible element 314 between the first electrode 350 and the cutting portion of the fusible elements 314P.

According to some embodiments, the indication fusible element 314I is configured to disconnect when the fusible element 314 has been disconnected, wherein the indication device 600 is configured to visually and/or electrically indicate a disconnected state of the FSPD 300, 400, and 500 upon a determination that the indication fusible element 314 has disconnected.

With reference to FIGS. 30-32, the indication device 600 includes an insulating housing 601, an insulating housing cover 602, an indication flag 603, a leaf spring 604, a microswitch 605, an electrical terminal 606, a connecting cable 607 and an indication window 608.

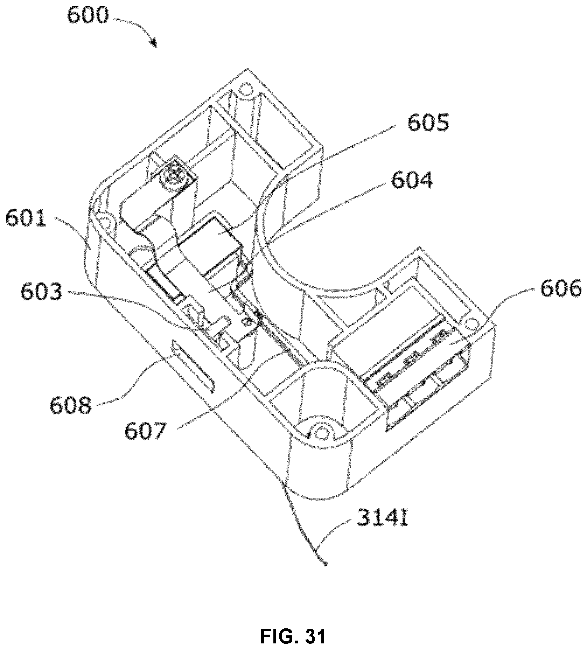

With reference to FIG. 31, the indication flag 603, the leaf spring 604, the microswitch 605, the electrical terminal 606 and the connecting cable 607 are disposed in the insulating housing 601 and enclosed by the insulating hosing cover 602. The indication flag 603 and the microswitch 605 are mechanically connected to the pretensioned leaf spring 604 being held in the initial position by the indication fusible element 314I.

According to some embodiments and with reference to FIGS. 30-32, during the disconnecting event of the fusible element 314 due to the fault currents, a certain amount of the fault current will be transferred to the indication fusible element 314I, which leads to the melting and/or evaporation of the indication fusible element 314I and thus its disconnection. The disconnection (melting) of the indication fusible element 314I releases the leaf spring 604, which displaces away from the initial position causing to the movement of the indication flag 603 and the changeover of the microswitch 605 connections. The movement of the indication flag 603 from its initial position changes the color of an indication window 608 visually indicating the disconnected state of the FSPD. In the same manner, the changeover of the microswitch 605 connections, electrically connected via the connecting cable 607, enables the electrical indication of the disconnected state of the FSPD 300, 400 to an external monitoring device being connected to the terminal 606. In the same manner, the electrical and visual indication is achieved in the case of the limited fault current interruption by the thermal disconnect mechanism (330, 430, 530), wherein the disconnection of the indication fusible element is achieved by the operation of the TDM (330, 430, 530) cutting the indication fusible element 314I along with the fusible element 314.

According to some embodiments, the indication fusible element 314I may be formed of any suitable material and in any suitable shape. In some embodiments, the fusible element 314I is a metallic wire made of the material with the substantially lower electrical conductivity compared to the copper.

Further embodiments of the present invention may be defined by the following list of non-limiting items below.
1. A fused surge protective device comprising:
   a fuse device forming a fault current protection; and
   an overvoltage protection circuit;
   wherein the fuse device and the overvoltage protection circuit are configured in a mechanically unitary construction and an electro-thermo-mechanically coupled operation.
2. The fused surge protective device of Item 1 including:
   a thermal actuator; and
   a thermal disconnect mechanism;
   wherein:
      the thermal actuator is configured to supply the thermal disconnect mechanism with an actuating force in response to heat from the overvoltage protection circuit and/or fuse device;
      the thermal disconnect mechanism is configured to trip the fuse device, thereby electrically disconnect the fused surge protective device from the power source in response to the actuating force from the thermal actuator;
      the thermal actuator and the thermal disconnect mechanism form the electro-thermo-mechanically coupled operation of the fuse device and overvoltage protection circuit.
3. The fused surge protective device of Item 1 including:
   a first electrode forming a first electrical terminal;
   a housing electrode forming a second electrical terminal and including an end wall and an integral sidewall collectively defining a cavity;
   a coupling electrode;
   wherein:
      the overvoltage protection circuit is disposed in the cavity of the housing electrode and interposed between the end wall and the coupling electrode;
      the first electrode, the fuse device, the coupling electrode, and the housing electrode are configured and secured in a mechanically unitary construction operative to resist and contain excessive heat, arcing, abnormal pressure, and mechanical stress, providing a hazard-free operation of the fused surge protective device;
      the first electrode, the fuse device, the coupling electrode, and the housing electrode are configured and secured in a mechanically unitary construction, confining the overvoltage protection circuit in a mechanically endurable enclosure operative to resist and contain excessive heat, arcing, abnormal pressure, and mechanical stress during the overvoltage protection circuit failure.
4. The fused surge protective device of any preceding Item wherein the fuse device includes:
   an electrically insulating housing;
   a fusible element disposed in the fuse housing electrically connecting the first terminal and the coupling electrode forming an electrical series of the first electrical terminal, the fusible element, the coupling electrode, the overvoltage protection circuit, and the second electrical terminal;
   an electric arc extinguishing agent disposed in the fuse housing surrounding the fusible element;
   wherein the fusible element is configured to disintegrate and open an electrical connection between the first terminal and the coupling electrode, thereby electrically disconnect the fused surge protective device from the power source in response to a fault current exceeding a prescribed minimum fusing current of the fusible element for at least a prescribed duration.
5. The fused surge protective device of Item 2 and Item 4 wherein the thermal actuator is configured to supply the thermal disconnect mechanism with an actuating force in response to a fault current insufficient to disintegrate the fusible element.
6. The fused surge protective device of Item 2 and Item 4 wherein the thermal disconnect mechanism is configured to mechanically cut and break the fusible element and open an electrical connection between the first electrical terminal and the coupling electrode, thereby electrically disconnect the fused surge protective device from the power source, in response to the actuating force from the thermal actuator.
7. The fused surge protective device of Item 2 and Item 4 wherein the thermal disconnect mechanism is configured to melt and disintegrate the portion of the the fusible element and open an electrical connection between the first electrical terminal and the coupling electrode, thereby electrically disconnect the fused surge protective device from the power source, in response to the actuating force from the thermal actuator.
8. The fused surge protective device of Item 2 and Item 4 wherein:
   the thermal disconnect mechanism includes:
      an electrically insulating carrier; and
      a spring-loaded cutter;
   the thermal actuator includes:
      a main body;
      a piston; and
      an expandable agent;
   wherein the expandable agent is operative to expand and displace the piston supplying the spring-loaded cutter with the actuating force in response to heat from the overvoltage protection circuit and/or fuse device; the actuating force being sufficient to mechanically cut and break the fusible element and open an electrical connection between the first electrical terminal and the coupling electrode, thereby electrically disconnect the fused surge from the power source.
9. The fused surge protective device of Item 2 and Item 4 wherein:
   the thermal disconnect mechanism includes:
      an electrical control circuit;
      an exothermic member; and
      an electrical connection;
   the thermal actuator is a thermoelectric generator;
   wherein the thermal actuator is operative to generate an electromotive force and electrically charge the thermal disconnect mechanism in response to heat flow through the thermal actuator, generated by the temperature increase of the overvoltage protection circuit; the electrical charge being sufficient to ignite the exothermic member; the exothermic member when ignited cuts and breaks the fusible element and opens an electrical connection between the first electrical terminal and the coupling electrode, thereby electrically disconnecting the fused surge from the power source.
10. The fused surge protective device of Item 2 wherein the thermal actuator is configured, directly or indirectly, in thermal contact with the overvoltage protection circuit and/or fuse device.
11. The fused surge protective device of Item 2, Item 3, and Item 4 wherein the coupling electrode includes a borehole and the thermal actuator is disposed in the borehole, securing a thermal contact with the overvoltage protection circuit and/or fuse device.
12. The fused surge protective device of Item 4 wherein the fusible element is a metallic strip.
13. The fused surge protective device of Item 12 wherein the fusible element is a perforated metallic strip.
14. The fused surge protective device of Item 12 wherein the fusible element has a strip width WS in the range of from about 1 mm to 10 mm, a strip length LS in the range of from about 10 mm to 200 mm, and a strip thickness TS in the range of from about 0.05 mm to 1 mm.
15. The fused surge protective device of Item 4 wherein the fusible element includes a plurality of preformed weak points WP operative to melt and cause a spatially distributed electrical arcing during fault current interruption.
16. The fused surge protective device of Item 4 wherein the fusible element is a serial or chain connection of a plurality of metallic elements or portions having different electrical conductivities and sizes.
17. The fused surge protective device of Item 4 wherein the fuse housing is formed of ceramic.
18. The fused surge protective device of Item 4 wherein the fuse housing is formed of composite materials.
19. The fused surge protective device of Item 4 wherein the fuse housing includes two layers and a first layer is formed of ceramic and a second layer is formed of composite or polymeric material; the first layer being an inner layer of the fuse housing.
20. The fused surge protective device of Item 4 wherein the arc extinguishing agent is silica (silicon dioxide) granules (sand).
21. The fused surge protective device of Item 1 wherein the overvoltage protection circuit includes a voltage-switching/limiting component.
22. The fused surge protective device of Item 1 wherein the overvoltage protection circuit includes a plurality of voltage-switching/limiting components connected in electrical parallel or series.
23. The fused surge protective device of Item 21 and Item 22 wherein the voltage-switching/limiting component is a varistor, a spark gap, a horn spark gap, a gas discharge tube, a diode, a multicell GDT, or a thyristor.
24. The fused surge protective device of Item 1 wherein the overvoltage protection circuit includes a combination of varistors, spark gaps, horn spark gaps, gas discharge tubes, and/or other circuit elements, such as resistors, inductors, or capacitors, connected in electrical parallel or series.
25. The fused surge protective device of Item 3 wherein the housing electrode and the coupling electrode are monolithically formed of metal.
26. The fused surge protective device of Item 1, Item 3, and Item 4 including a compressible member interposed between the coupling electrode and the fuse housing operative to compress and assert mechanical pressure on the coupling electrode, forming a high-pressure contact of the overvoltage protection circuit with the coupling electrode and the housing electrode.
27. The fused surge protective device of Item 26 wherein the compressible member is formed of a polymer material.
The embodiments of the present invention may also be defined by the following non-limiting items below.
28. A fused surge protective device comprising:
   a first electrode forming a first electrical terminal;
   a housing electrode forming a second electrical terminal and including an end wall and an integral sidewall collectively defining a cavity;
   a coupling electrode;
   an overvoltage protection circuit disposed in the cavity of the housing electrode and interposed between the end wall and the coupling electrode;
   a fuse device forming a fault current protection and including:
      a fusible element electrically connecting the first electrical terminal and the coupling electrode, forming an electrical series of the first electrical terminal, the fusible element, the coupling electrode, the overvoltage protection circuit, and the second electrical terminal;
      a fuse housing;
      an arc extinguishing media disposed in the fuse housing surrounding the fusible element;
   a thermal actuator configured in direct or indirect thermal contact with the overvoltage protection circuit and/or fuse device;
   a thermal disconnect mechanism disposed in the fuse device;
   wherein:
      the fusible element is configured to disintegrate and open an electrical connection between the first electrical terminal and the coupling electrode, thereby electrically disconnect the fused surge protective device from the power source in response to a fault current exceeding a prescribed minimum fusing current of the fusible element for at least a prescribed duration;
      the thermal actuator is operative to supply the thermal disconnect mechanism with an actuating force in response to heat from the overvoltage protection circuit and/or fuse device;
      the thermal disconnect mechanism is configured to mechanically cut and break the fusible element, thereby electrically disconnect the fused surge protective device from the power source in response to the actuating force from the thermal actuator;
      the first electrode, the fuse device, the coupling electrode, the housing electrode, the overvoltage protection circuit, the thermal actuator, and the thermal disconnect mechanism are configured and secured in a mechanically unitary construction and an electro-thermo-mechanically coupled operation.
29. The fused surge protective device of Item 28 wherein:
   the first electrode, the fuse device, the coupling electrode, and the housing electrode are configured and secured in a mechanically unitary construction operative to resist and contain excessive heat, arcing, abnormal pressure, and mechanical stress, providing a hazard-free operation of the fused surge
   protective device;
   the first electrode, the fuse device, the coupling electrode, and the housing electrode are configured and secured in a mechanically unitary construction, confining the overvoltage protection circuit in a mechanically endurable enclosure operative to resist and contain excessive heat, arcing, abnormal pressure, and mechanical stress during the overvoltage protection circuit failure.
30. The fused surge protective device of Item 28 wherein the thermal actuator is configured to supply the thermal disconnect mechanism with an actuating force in response to a fault current insufficient to disintegrate the fusible element.
31. The fused surge protective device of Item 28 wherein:
   the thermal disconnect mechanism includes:
      an electrically insulating carrier; and
      a spring-loaded cutter;
   the thermal actuator includes:
      a main body;
      a piston; and
      an expandable agent;
   wherein the expandable agent is operative to expand and displace the piston supplying the spring-loaded cutter with the actuating force in response to heat from the overvoltage protection circuit and/or fuse device; the actuating force being sufficient to mechanically cut and break the fusible element and open an electrical connection between the first electrical terminal and the coupling electrode, thereby electrically disconnect the fused surge from the power source.
32. The fused surge protective device of Item 28 wherein:
   the thermal disconnect mechanism includes:
      an electrical control circuit;
      an exothermic member; and
      an electrical connections;
   the thermal actuator is a thermoelectric generator;
   wherein the thermal actuator is operative to generate an electromotive force and electrically charge the thermal disconnect mechanism in response to heat flow through the thermal actuator, generated by the temperature increase of the overvoltage protection circuit; the electrical charge being sufficient to ignite the exothermic member; the exothermic member when ignited cuts and breaks the fusible element and opens an electrical connection between the first electrical terminal and the coupling electrode, thereby electrically disconnecting the fused surge from the power source
33. The fused surge protective device of Item 28 wherein the coupling electrode includes a borehole and the thermal actuator is disposed in the borehole securing a thermal contact with the overvoltage protection circuit and/or fuse device.
34. The fused surge protective device of Item 28 wherein the fusible element is a metallic strip.
35. The fused surge protective device of Item 34 wherein the fusible element includes a plurality of preformed weak points WP operative to melt and cause a spatially distributed electrical arcing during fault current interruption.
36. The fused surge protective device of Item 34 wherein the fusible element is a serial or chain connection of a plurality of metallic elements or portions having different electrical conductivities and sizes.
37. The fused surge protective device of Item 28 wherein the fuse housing is formed of ceramic.
38. The fused surge protective device of Item 28 wherein the fuse housing includes two layers and a first layer is formed of ceramic and a second layer is formed of composite or polymeric material; the first layer being an inner layer of the fuse housing.
39. The fused surge protective device of Item 28 wherein the arc extinguishing agent is silica (silicon dioxide) granules (sand).
40. The fused surge protective device of Item 28 wherein the overvoltage protection circuit includes a single voltage-switching/limiting component and/or a plurality of voltage-switching/limiting components connected in electrical parallel or series.
41. The fused surge protective device of Item 40 wherein the voltage-switching/limiting component is a varistor, a spark gap, a horn spark gap, a gas discharge tube, a diode, a multicell GDT, or a thyristor.
42. The fused surge protective device of Item 28 wherein the overvoltage protection circuit includes a combination of varistors, spark gaps, horn spark gaps, gas discharge tubes, and/or other circuit elements, such as resistors, inductors, or capacitors, connected in electrical parallel or series.
43. The fused surge protective device of Item 28 wherein the housing electrode and the coupling electrode are monolithically formed of metal.
44. The fused surge protective device of Item 28 including a compressible member interposed between the coupling electrode and the fuse housing operative to compress and assert mechanical pressure on the coupling electrode, forming a high-pressure contact of the overvoltage protection circuit with the coupling electrode and the housing electrode.
45. The fused surge protective device of Item 44 wherein the compressible member is formed of a polymer material.
46. The fused surge protective device of Item 44 wherein the compressible member is a spring.

## Claims

1. A fused surge protective device comprising:
a first electrical terminal,
a second electrical terminal,
a fuse device comprising a fusible element,
an overvoltage protection circuit,
the fuse device and the overvoltage protection circuit interconnecting the first electrical terminal and the second electrical terminal, thereby providing a current path between the first and second electric terminal, the fusible element being part of the current path,
the fuse device and the overvoltage protection circuit being thermally coupled to a thermal actuator;
the thermal actuator being configured to activate a thermal disconnect mechanism in response to a temperature increase of and/or a heat flow through the thermal actuator, in particular when the temperature and/or the heat flow exceeds a prescribed trigger level,
the thermal disconnect mechanism disconnecting the fusible element after being actuated by the thermal actuator.

2. The fused surge protective device of claim 1, comprising a coupling electrode interconnecting the fusible element and the overvoltage protection circuit.

3. The fused surge protective device of any one of the preceding claims, wherein the thermal disconnect mechanism comprises a cutting element, the cutting element being configured to cut through the fusible element.

4. The surge protective device of claim 3, wherein the thermal disconnect mechanism comprises a spring, the spring preloading the cutting element, wherein the thermal actuator is configured to activate the thermal disconnect mechanism by releasing the spring, such that the cutting element driven by the spring moves in a position to cut the fusible element.

5. The surge protective device of any of the preceding claims, wherein the thermal actuator comprises a hydraulic cylinder, the hydraulic cylinder comprising a cylinder cavity and a piston.

6. The surge protective device of claim 5, wherein the cylinder cavity is filled with an expandable agent, wherein the expandable agent is operative to expand and displace the piston, the piston actuating the thermal disconnect mechanism with an actuating force in response to heat from the overvoltage protection circuit and/or fuse device; the actuating force being sufficient to disconnect the fusible element.

7. The surge protective device of any of the preceding claims, wherein the thermal actuator comprises a thermoelectric generator, such as a Peltier device.

8. The surge protective device of claim 7, wherein the thermal actuator comprises a control circuit charged by the thermoelectric generator in response to the temperature increase of and/or the heat flow through the thermal actuator, the control circuit being configured to activate the thermal disconnect mechanism by releasing an electrical charge in response to the temperature and/or the heat flow exceeding a prescribed trigger level.

9. The fused surge protective device of any one of the preceding claims, wherein the thermal disconnect mechanism comprises an exothermic member arranged on the fusible element, the exothermic member being configured to disconnect the fusible element by an exothermic process.

10. The fused surge protective device of any one of the preceding claims, wherein the fuse device comprises a fuse housing having a fuse cavity, the fusible element and the thermal disconnect mechanism being arranged in the fuse cavity, wherein, optionally, the fuse housing is filled with an electric arc extinguishing agent, such as gas and/or sand, such as silica sand.

11. The fused surge protective device of any one of the preceding claims, wherein the overvoltage protection circuit comprises a conductive housing, the conductive housing comprises or forms the second electrical terminal.

12. The fused surge protective device of any one of the preceding claims, comprising an indication fusible element and an indication device, the indication fusible element being coupled in parallel with the fusible element between the first electrical terminal and the overvoltage protection circuit, the indication fusible element being configured to disconnect when the fusible element has been disconnected, wherein the indication device is configured to visually and/or electrically indicate a disconnected state of the fused surge protective device upon a determination that the indication fusible element has disconnected.

13. The fused surge protective device of any of the preceding claims, comprising an indication fusible element being coupled in parallel with the fusible element between the first electrical terminal and the overvoltage protection circuit, wherein the thermal disconnect mechanism disconnects the indication fusible element after being activated by the thermal actuator.

14. The fused surge protective device of any of the preceding claims, wherein the fusible element comprises at least one designated disconnection portion, such as weak spots.

15. The fused surge protective device of any of the preceding claims, wherein the fuse device, the first- and second electrical terminal, the coupling electrode and the overvoltage protection circuit are assembled in a unitary construction.
